## Europäisches Patentamt

## European Patent Office

## Office européen des brevets

(11) Publication number: **0 439 986 A1**

# EUROPEAN PATENT APPLICATION

(21) Application number: **90480019.0**

(22) Date of filing: **02.02.90**

(51) Int. Cl.5: **H04L 12/26**

(43) Date of publication of application:
**07.08.91 Bulletin 91/32**

(84) Designated Contracting States:
**DE FR GB**

(71) Applicant: **International Business Machines Corporation**
**Old Orchard Road**
**Armonk, N.Y. 10504(US)**

(72) Inventor: **Moreau, Robert**
**3 Avenue Cyrnos**
**F-06100 Nice(FR)**

(74) Representative: **Tubiana, Max**
**Compagnie IBM France Département de Propriété Industrielle**
**F-06610 La Gaude(FR)**

(54) **Data communications equipment testing tool.**

(57) This test tool is connectable in series over a transmission link (RD/TD) between two end-user communication equipments. The test tool includes a program controlled frame modifier provided with PC type operator terminal, interface (30-37) means for connecting said terminal to the transmission link and program facilities for enabling menu driven selection of frame field(s) to be altered at will and for monitoring and altering accordingly data flowing over said link.

FIG.3

## DATA COMMUNICATIONS EQUIPMENT TESTING TOOL

This invention deals with digital data transmission devices and more particularly with a tool for checking data communications equipment robustness to on-line alterations of data.

Technical Background

Modern data communications equipments are fairly complex devices communicating with each other using predefined protocols. Designing and maintaining high quality data transmission equipment obviously require means for testing said equipment ability to both detect and recover from situations wherein the data flowing over the transmission link are being disturbed. To that end, one needs to determine how the communications equipment reacts to any possible alteration to the data.

Coherence and intelligibility over a data communication network are generally achieved through use of nationally or internationally established protocols defining data framing rules with each frame including several fields each being assigned a specific task. For instance, fields may be made available for addressing purposes (sender/destination), for data to be delivered to addressee, and for data integrity checking purposes such as the so called frame checking sequence (FCS) field. In operation, the contents of said FCS field are loaded with bit arrangements dynamically derived from the actual data frame contents, according to rules defined in CCITT recommendations. Reiterating the FCS computation on actually received data at addressee's location and cross-checking with the received FCC field contents, enables detecting frames altered in the transmission path.

Obviously, efficiently checking the robustness of a communication equipment being designed, requires means for checking its ability to detect and react to alterations occurring in any of the frame format fields. However, the consequences of alterations may differ with the field definition. For instance alterations in pure data may be recovered through frame retransmissions or through use of recovery algorithms. While alterations in other fields may be particularly detrimental. This emphasizes the usefulness of simple and flexible means for controlling specific field alterations.

Summary of the Invention

One object of this invention is to provide a fairly simple and convenient tool connectable to a transmission line between communications equipments and easily pre-settable by the user for altering at will field contents of data frames flowing between said communications equipments.

Another object of the invention is to provide a menu driven frame modifier easily connectable to a transmission link, and enabling the user altering at will any data frame field contents.

These and other objects and characteristics of the invention will be further described in conjunction with the attached drawings.

Brief Description of the Drawings

Figures 1 and 2 are block diagrams showing the insertion of the invention within a transmission network.
Figure 3 is a block diagram of a device for implementing the invention.
Figure 4 represents data frames processable using the invention.
Figures 5 and 6 are flowchart for the programs supporting the invention.
Figure 7 is a detailed block diagram of the device represented in Figure 3.

Detailed Description of a Preferred Embodiment

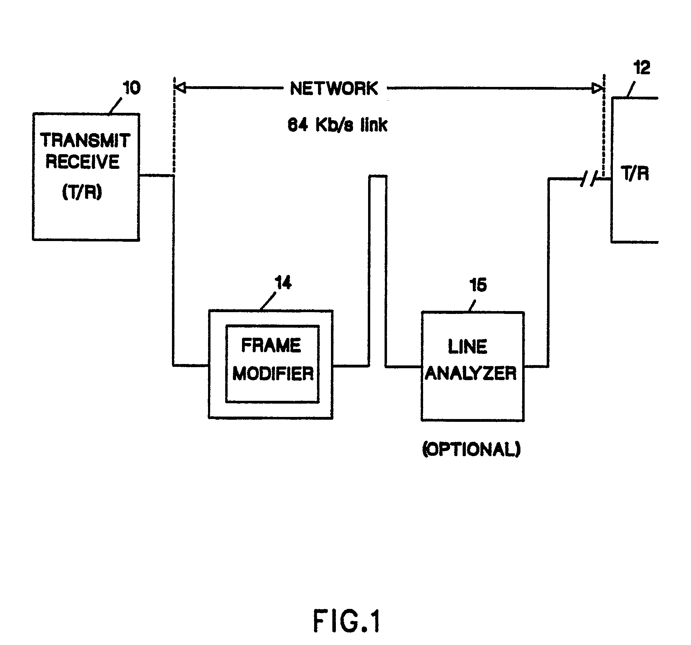

Represented in Figure 1 is a block diagram illustrating the invention as applied within a bi-directional transmission link. Let's assume digital packet transmit/receive stations T/R 10 and 12, acting as end users, are connected to each other via a 64 kbps link. The test tool (frame modifier) is inserted in the network to act as repeater for selectively altering data flowing through the link.

In other words means are provided to enable an operator using said tool, to set the modifier at will to perform frame alterations, and monitor, using a line analyzer 15, the transmit/receive stations reactions to said alterations. In other words, the frame modifier enables testing the ability of the transmission system to detect and in some instance react to specific operator selected alterations to packet frame. Without touching at the transmission equipments 10 and 12, the operator will be able to set the frame modifier at will and then let it modify preselected frames fields flowing within the 64 kbps link.

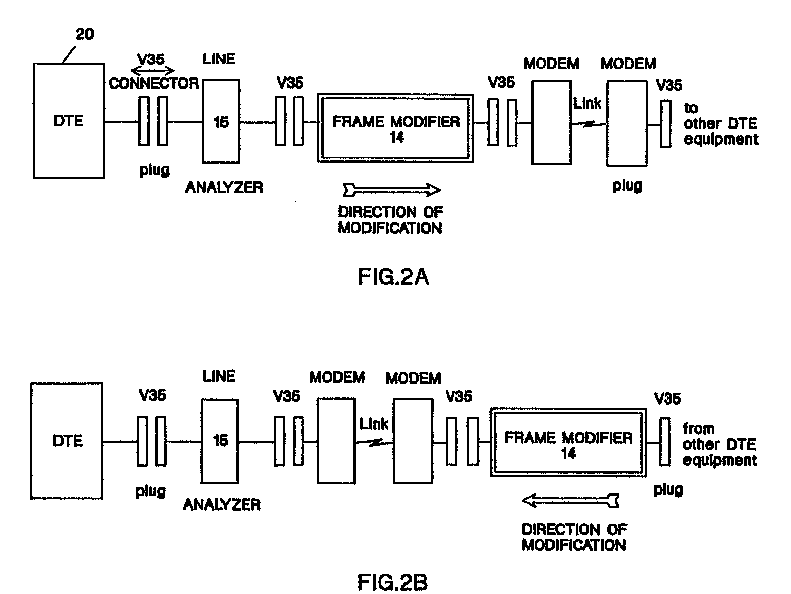

Frame alterations are performed in one direction only to enable the line analyzer monitoring the returning data flow. Several specific arrangements may be considered. For instance, assuming a Data Terminal Equipment (DTE) 20 is connected to the transmission link to communicate with another DTE (not represented) through modem equipments, the line analyzer 15 and frame modifier 14 may be serially connected using CCITT V35 connectors, either as represented in Figure 2A or as represented in Figure 2B. The selected analyzer is a Hewlet-Packard HP4953A able to monitor and display frames flowing in both directions while frame modifications are performed in one direction only.

The frame modifier 14 includes a card pluggable into a micro-computer, and a program which could be loaded and executed to enable the user defining the test to be performed by programming (pre-setting) the selected frame fields modifications to be applied in operation. Exceptional convenience is achieved through a user friendly menu oriented system.

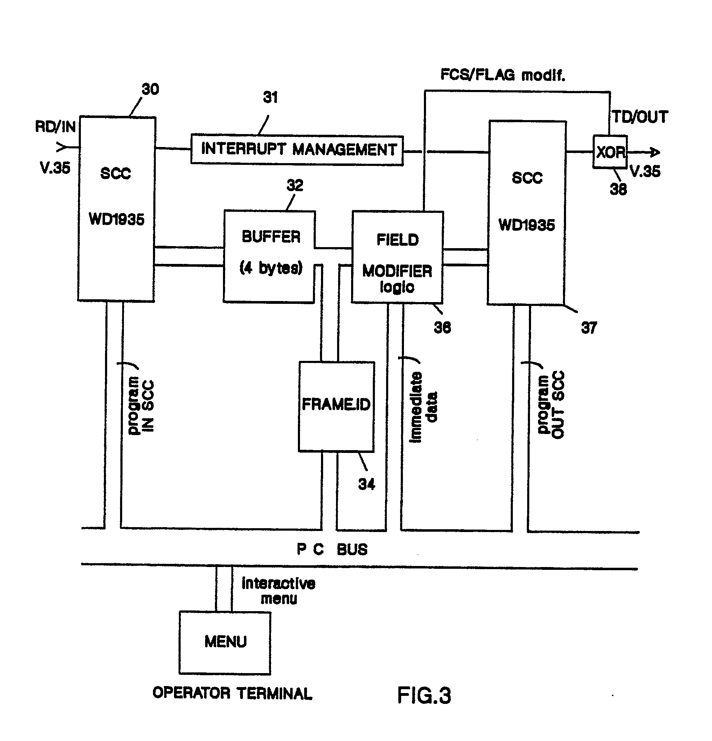

Represented in Figure 3 is a block diagram of the frame modifier architecture and more particularly of the modifier card inserted within a PC type micro-computer providing an operator terminal. The data are serially received on the RD (Receive Data) line through a V35 plug, and enter a Serial Communication Controller (SCC) device 30 managed and controlled by an interrupt management logic device 31 providing byte synchro scheduling. The received bytes are stored in a four bytes long buffer 32 providing a four-bytes delay between input and output.

As will be explained further with more details, the invention enables processing several types of conventional frames. In operation, the type of frame selected for being altered needs be identified, using a frame identifier (FRAME.ID) 34 monitoring the received frames. The received frame format will be compared with a user's terminal pre-defined format, which was defined using an interactive menu. Those recognized packets will trigger the pre-set field modifications in a field modifier logic device 36. Then, the flowing bytes are reserialized into SCC output device 37. In operation, the device 37 is made to recompute and insert Field Check Sequences (FCS) for any processed frame. Assuming the FCS or the flag field was the field selected for being altered, FCS Flag alteration is simply achieved using the logic 36 to gate a XOR circuit 38 inverting the FCS or Flag bits on the serializer 37 output. Program IN SCC and OUT SCC are used to program via the PC bus, the SCC's internal registers to set the correct SCC's configuration.

In summary, the flow of data received at the input of the frame modifier is retransmitted over the transmission link with a slight delay of four bytes. In operation, the modifier is either transparent, i.e. no modification to any flowing frame has been programmed, or not transparent, in which case received data are permanently monitored to identify those fields wherein data alterations should occur, perform said alterations and retransmit the data over the 64 kbps link, toward its destination. By altering the data flowing in one direction only, one may then, by looking at the return path, monitor and analyze the communication system behavior and its ability to detect any field alterations.

As already mentioned, data framing may be performed differently, depending on the type of transmission considered. Said framings are however fully defined through national or international instances such as the CCITT.

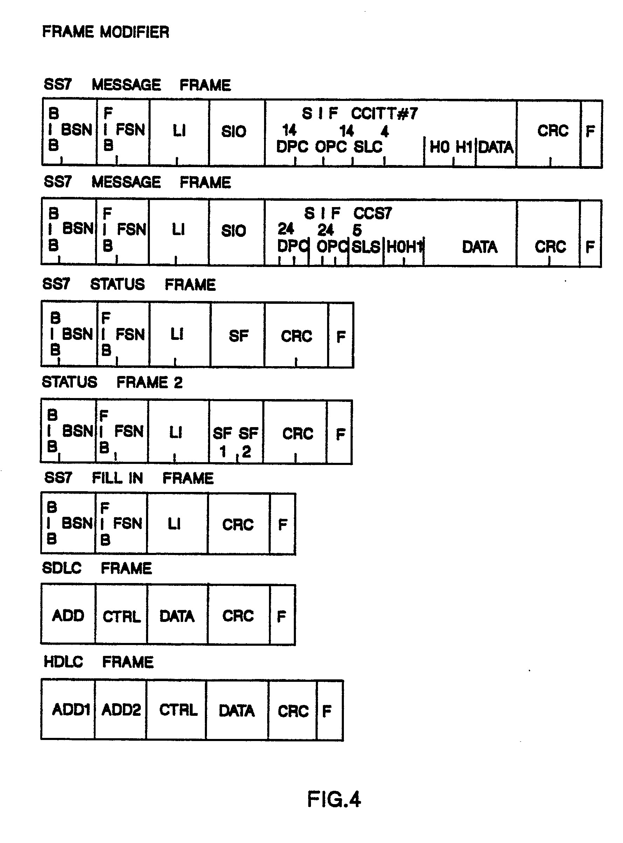

Represented in Figure 4 are seven different frames selected for being processable by the preferred embodiment of this invention. In addition to pure data field, they all include header/trailer fields intended for frame control purposes. For instance, the frames may include sequence fields (BSN/FSN) wherein cyclically generated sequence numbers are loaded to enable detecting a frame loss at the receiving site when out-sequenced frames are received. A given frame may also include, a length indicator (LI) for variable length frames and possibly other fields. The frame modifier may be described as applying to any of the above defined frames. In most cases a frame to be modified will be identified through its LI field (third frame field).

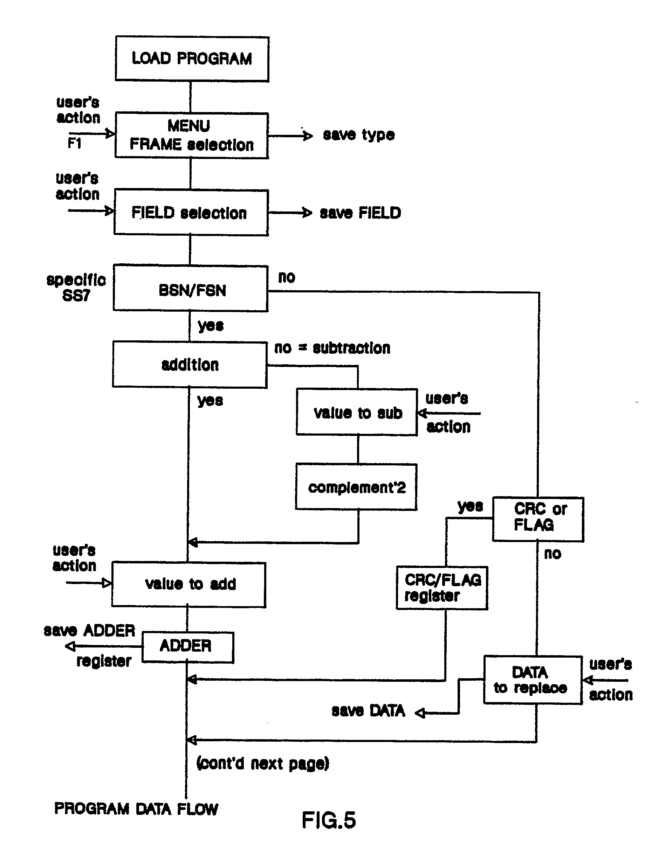

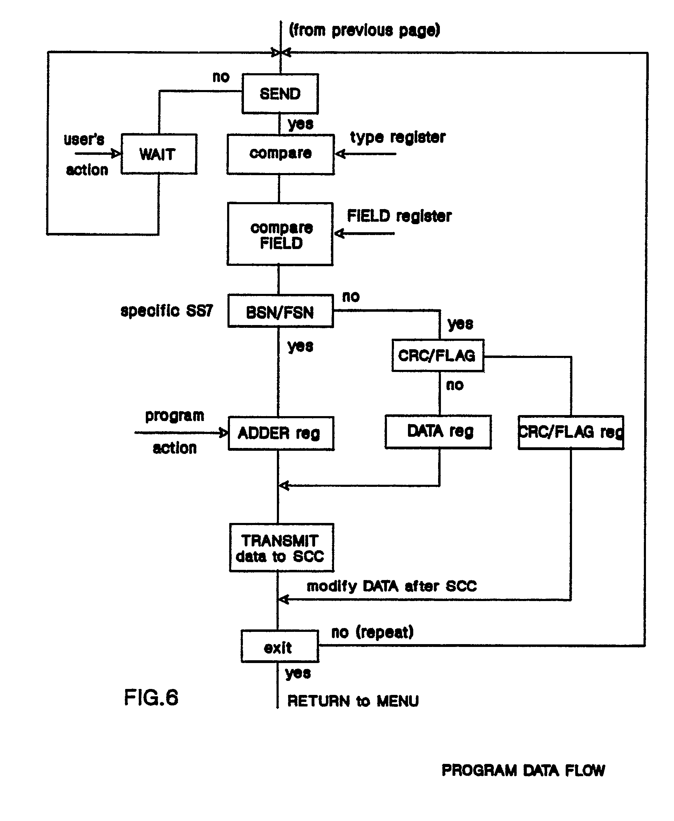

Represented in Figures 5 and 6 are flow-charts for implementing the invention. Based on these flow-charts and on the following description of the invention as applied to traffic involving CCITT N° 7 message frames, one may easily derive programs to implement the invention.

Loading the program through any of the PC drives and executing said programs triggers displaying a menu showing the various frames selected for being accessible to frame alteration operations. The operator's terminal function keys have been customized to enable easily selecting among the accessible frames. Obviously, the principles of this invention do apply to any other frame structure.

Let's assume function key F1 is depressed selecting frame type CCITT N° 7 (SS7 message frame i.e. first frame in Figure 4). The system saves the selected frame type indication and displays the following screen :

```
┌──────────────────────────────────────────────────────────────────────────────────────┐
│  ┌─────┬──────┬────────┬────────┬────────────────────────────────────┬──────┬──────┐  │
│  │ B   │ F    │        │        │  S  I  F      CCITT#7              │      │      │  │
│  │ I BSN│ I FSN│   LI   │  SIO   │  14     14    4                    │ CRC  │  F   │  │
│  │ B   │ B    │        │        │  DPC OPC SLC      |H0 H1 |DATA      │      │      │  │
│  └─────┴──────┴────────┴────────┴────────────────────────────────────┴──────┴──────┘  │
│   ▪                                                                                    │
│                                                                                        │
│        BACKWARD SEQUENCE NUMBER                                                        │
│    ┌─────────────────────────────────┐                                                │
│    │          B S N                  │       SELECT ADDITION OR SUBSTRACTION          │
│    │                                 │                                                │
│    │ 7 │ 6 │ 5 │ 4 │ 3 │ 2 │ 1 │ 0  │       ┌──────┐                                 │
│    └─────────────────────────────────┘       │ + -  │                                 │
│      └──▶ BACKWARD INDICATOR BIT              └──────┘                                 │
│                                                                                        │
│                                                                                        │
│                                               F9  MODIFY FIELD    F10  EXIT            │
└──────────────────────────────────────────────────────────────────────────────────────┘
```

The frame (see upper part of screen) is first fully displayed, with a cursor just out of the frame. Moving the cursor up to first bit position of any frame field, using cursor controlling keyboard keys displays the selected field while the system saves (stores) the field reference. First fields being scanned are Sequence Number fields for storing frame sequence number. In operation, these fields are intended for being loaded with cyclically generated consecutive numbers to enable detecting out-sequenced frames indicating for instance a frame loss, or identifying an otherwise altered frame. Two different sequence number fields are identified in CCITT N° 7. One designated BSN standing for Backward Sequence Number, the other FSN standing for Forward Sequence Number. Both fields are one byte long. Pointing at the BSN field, automatically triggers displaying a detailed representation of said field contents (see lower part of above represented screen) with bit positions being numbered zero to seven, and saves the selected field reference. BSN bit seven position is used to indicate that retransmission of received frame has or should occur. The remaining seven bits represent the frame identifying sequence number. Depressing function key F9 then triggers BSN processing for programming selected alteration. Since the field contents designates a sequence number, any alteration should correspond to an addition or subtraction. Visual representation is achieved through a small window with the sign +/- being displayed. The cursor is movable to indicate whether alteration to be programmed for test purposes should involve adding or subtracting. Depressing enter key sets the choice, and the program transfers the cursor to the field representation. A counter is set and displayed together with a message indicating that counter contents "will be added to the field", except for bit seven which could only be complemented (reversed). Then, pointing at bit seven and depressing enter key sets the message "backward indicator bit reversed". This will be achieved through a simple XOR logic operation on bit seven. While pointing at another BSN bit (0 through 6) and depressing the enter key loads the counter with a decimal value to be added (or subtracted) depending on the bit weight (1 for position zero, 2 for position one, 4 for position three and so on) of the pointed-at bit. Pointed-at bit alterations are cumulative thus up to decimal value 128 (for all six bits, zero through six being selected or being altered).

Assume + was selected, then the cursor was moved to bit position one and enter key depressed. The system will display the panel shown hereunder.

4

```
                    SS7      MESSAGE      FRAME

  ┌──────┬────────┬──────┬──────┬─────────────────────────┬──────┬────┐
  │ B    │ F      │      │      │   S I F    CCITT#7       │      │    │
  │ I BSN│ I FSN  │  LI  │ SIO  │  14    14   4            │ CRC  │ F  │
  │ B    │ B      │      │      │  DPC OPC SLC  |H0 H1 |DATA│      │    │
  └──────┴────────┴──────┴──────┴─────────────────────────┴──────┴────┘


     BACKWARD  SEQUENCE  NUMBER    PRESS ENTER TO CONFIRM THE MODIFICATION
            ■
  ┌───────────────────────────┐     ┌─────┐
  │          B S N            │     │ 032 │   WILL BE ADDED TO THE FIELD
  │  7   6   5   4   3  2  1  0│     └─────┘
  └───────────────────────────┘
  └─▶ BACKWARD  INDICATOR  BIT

Command line
──────────────────────────────────────────────────────────────────────
TRANSMISSION IN PROCESS                         F10 = CANCEL COMMAND
```

The cursor points-out to "Backward Sequence Number" bit position 1. Then, let's assume the cursor is moved to position 5, i.e. bit weighted 32. Depressing the enter key adds 32 to the previous counter contents, i.e. 000. the result is 32. Let's then move the cursor back to position 1 and press enter key. The counter adds 2 to 32 and stores 34. Selected modification are constantly displayed with emphasis, e.g. bits 1 and 5 flashing and/or colored differently from remaining BSN bits

Should, on the contrary, subtraction having been selected rather than addition, the user operations would look similar to the above, except that the value stored into the counter would be 2's - complemented before being fed into the ADDER (see flow chart of Figure 5).

As represented in Figure 5, first field selection enables discriminating among the various types of frames available to the system and represented in Figure 4. This explains why, should the test on BSN/FSN be negative, then the system would look for processing CRC or Flag field, prior to proceeding further to data.

The system was designed for processing single-field alterations. Therefore the system may be set ready once the program modifiable field has been selected by depressing function key F5. The system would then proceed with monitoring the 64 kbps link flowing data and apply the programmed modifications (see flow chart of Figure 6). Once SEND key CRC/Flag are performed to track packets to be altered and then proceed further.

However, assuming no BSN/FSN alteration is to be programmed, then, the cursor would be moved to next frame field, i.e. to Length Indicator (LI) field. The system displays Length Indicator contents.

| B I BSN B | F I FSN B | LI | SIO | S I F     CCITT 7 14    14    4 DPC OPC SLC     HO H1 DATA | CRC | F |
|---|---|---|---|---|---|---|

LENGTH INDICATOR

| ////// ////// ////// | L I 5    4    3    2    1    0 x    x    x    x    x    x |
|---|---|

FILL IN:   LI = 0
STATUS1:   LI = 1
STATUS2:   LI = 2
MESSAGE:   LI > 2

Command line
◄ MOVE CURSOR ►  F1  HELP                    F9  MODIFY FIELD    F10  EXIT

This field contents helps defining frame length and differentiating among the various types of frames. Obviously ascertaining integrity to this field or enabling detection of any violation to said field is particularly important. This emphasizes the usefulness of the invention which enables testing the transmission system ability to detect any violation to the LI field contents.

LI field helps differentiating among three different communication frames : so-called fill-in frames bearing LI = 0; status frames with LI = 1 or 2 and messages frames with LI > 2.

LI is provided with a six bit field, with each bit position to be altered, if selected by the keyboard operator to be forced to store a zero, a one or an X (in which case, in fact, no alteration would be forecasted for corresponding bit position).

Again, depressing function key F9 triggers preparation of modifications to be provided by the frame modifier in operating conditions. Bringing the cursor to the specific bit position to be altered and selecting 0, 1 or X sets the system for programmed LI field alterations.

Next modifiable field is devoted to the service information byte (SIO). Two specific sections of this field (i.e. bits 0-3 and 6-7) may be addressed for alteration based on same principles as those used with reference to LI field, i.e. selected bits may be forced to 0 or 1 or left unchanged.

| B<br>I BSN<br>B | F<br>I FSN<br>B | LI | SIO | S I F    CCITT#7<br>14      14      4<br>DPC OPC SLC    HO H1 DATA | CRC | F |

### SERVICE INFORMATION BYTE

■

| S S F | /////// | S I O | | PRESS   0   1   OR   X |
|-------|---------|-------|-|------------------------|
| 7 6   | /////// | 3 2 1 0 | | |
| 1 x   | /////// | x x x x | | CHANGE WILL OCCUR ON MODIFIED BIT |

```
0   0 : I (INTERNATIONAL NETWORK)
0   1 : S (SPARE FOR INTERNATIONAL)
1   0 : N (NATIONAL NETWORK)
1   1 : R (RESERVED FOR NATIONAL)
```

Command line
◄ MOVE CURSOR ►   F1   HELP     F5   SEND              F10   RETURN

Next SS7 field are more particularly reserved for data and corresponding parameters such as destination, origin, etc... One should keep in mind that SLC/OPC do not include an integer number of bytes (OPC2 represents an half-byte, second part of OPC field).

### SS7      MESSAGE      FRAME

| B<br>I BSN<br>B | F<br>I FSN<br>B | LI | SIO | S I F    CCITT#7<br>14      14      4<br>DPC OPC SLC    HO H1 DATA | CRC | F |

### SIGNALLING LINK CODE / OPC2

■

| SLC | | | | OPC2 | | | | PRESS   0   1   OR   X |
|-----|-|-|-|------|-|-|-|------------------------|
| 3 | 2 | 1 | 0 | 6 | 5 | 4 | 3 | |
| 1 | x | 1 | x | 1 | 0 | x | x | CHANGE WILL OCCUR ON MODIFIED BIT |

```
SLC STRUCTURE = 4 BITS
      OPC STRUCTURE = 7 BITS
```

Command line
◄ MOVE CURSOR ►   F1   HELP     F5   SEND              F10   RETURN

Next modifiable field is a two-bytes long field intended for storing cyclic redundancy checking bytes (CRC). Any CRC alteration would mean that a transmission error occurred and should just trigger a retransmission request. Therefore, adequate CRC alterations may be fairly simple, e.g. achievable through use of XOR operations on both CRC bytes. Depressing F9 makes the system display a flashing window. Then depressing F5 confirms selection of CRC field contents for submission to further alterations.

```
┌─────────────────────────────────────────────────────────────────────────────┐
│                        SS7      MESSAGE      FRAME                           │
│  ┌───────┬───────┬─────────┬────────┬─────────────────────────┬──────┬──────┐│
│  │ B     │ F  .  │         │        │    S I F    CCITT#7      │      │      ││
│  │ I BSN │ I FSN │   LI    │  SIO   │   14     14    4         │ CRC  │  F   ││
│  │ B     │ B     │         │        │   DPC OPC SLC  |IIO II1|DATA    │      ││
│  │  |    │  |    │   |     │   |    │  |  |   |   |  |  |  |   │  |   │  |   ││
│  └───────┴───────┴─────────┴────────┴─────────────────────────┴──────┴──────┘│
│                           PRESS ENTER TO CONFIRM THE MODIFICATION             │
│  ┌──────────────────────────────────┐                                        │
│  │      C R C 1 / C R C 2           │                                        │
│  │          ▭▭▭▭▭▭▭                  │                                        │
│  │   7   6   5   4   3   2   1   0  │                                        │
│  │       |   |   |   |   |   |   |  │                                        │
│  └──────────────────────────────────┘                                        │
│  Command line                                                                 │
│  ─────────────────────────────────────────────────────────────────────────  │
│  TRANSMISSION IN PROCESS                            F10 = CANCEL COMMAND      │
└─────────────────────────────────────────────────────────────────────────────┘
```

Similarly, Flag alteration is achieved through XORing the flag bytes. In this case, in operating conditions, no flag would be identified and the input buffer would overflow. This very simple test should trigger said buffer overflow.

As already mentioned, once the operator has selected a specific field and programmed (i.e. pre-set) the frame modifier accordingly, depressing function key F5 (SEND) sets the test in operation. The programmed field alterations are made available to the compare frame device 34 (see Figures 3). Incoming data are deserialized into SCC 30 and buffered into a frame identifier/compare device 34. The system monitors the buffered frames, first to identify through a compare operation the frame type to be altered (see flow-chart Figure 6). Field compare and BSN/FSN tests enable detecting the specific SS7 type of frame looked for. Then, field modifier logic 36 is set operative to modify the selected field as programmed, prior to releasing the altered frame out toward the transmit data (TD) line via serializer SCC 37. Let's assume a BSN/FSN field was modified, SCC 37 recomputes and reinserts proper FCS prior to releasing the frame. Therefore, any requested FCS/Flag alteration should be taken care of. This is achieved by XORing (device 38) FCS/Flag provided by SCC 37. The modified frame is then released toward its destinations. Corresponding terminal equipment receiver reaction is monitored and checked within the line analyzer.

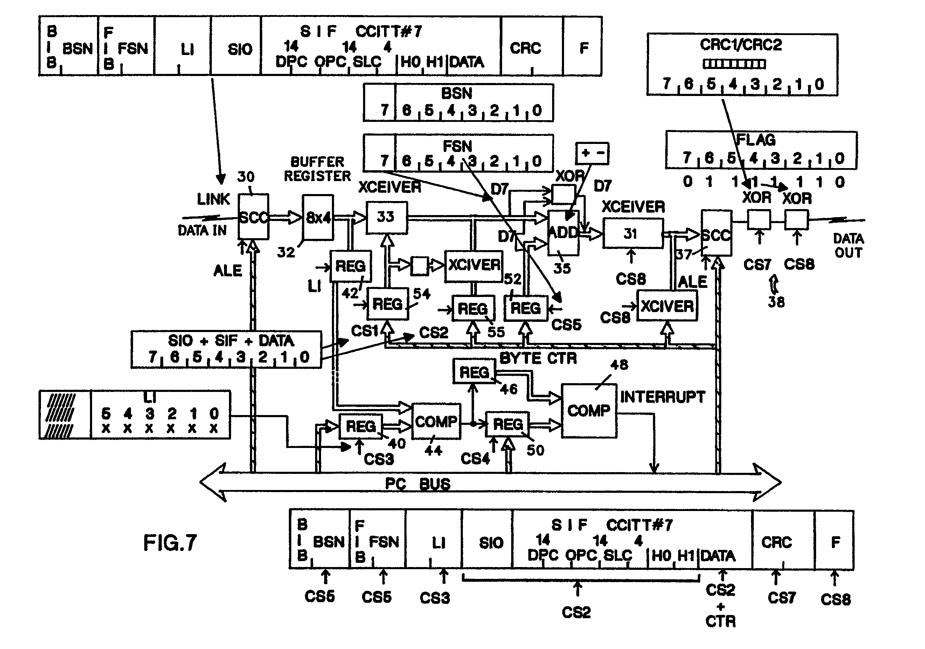

Represented in Figure 7 is a more detailed block diagram of the frame modifier device of Figure 3. More particularly, the design is made to emphasize the device operation for frame alterations programmed for being made operative on anyone of the frame fields of the flowing data (message). The device may naturally also be made purely transparent to the incoming frame, for frames not to be altered.

In transparent mode, the SCC's 30 and 37 have both been set in a mode compatible with the received message. For instance means have been set to perform conventional zero insertions/deletions and SCC 37 generates the correct CRC bytes. The frame modifier is automatically set to this transparent mode upon initial power-on operations. In such a mode, frames buffered into buffer register 32 are forwarded toward SCC 37 through transceivers 33 and 31 and an add/subtract device 35 all set transparent (e.g. add zero). Two XOR logic circuits (38) are also set to keep the flowing message unaltered.

Now, let's assume the frame modifier is set to operate on SS7 frames of the type represented in the upper left corner of Figure 7. To make the frame modifier description exhaustive let's scan the message frame and define the circuit components operations for any given field alteration. One should remember first that the most significant field contents to identify the flowing message frame, is the LI (Length Indicator). The buffer register 32 will provide a four bytes delay on the flowing message to enable any requested frame alteration on the two first fields (BSN or FSN) once LI is received and decoded to identify the message frame type.

As already mentioned, the menu oriented process starts with requesting selection of the type of frame the user wishes to modify. This selection automatically triggers the storage of the selected LI value into register 40 (chip selected 3 : CS3).

When, and only when, the message flowing through the system, bears the same LI (stored into LI register) as the CS3 register 40 stored LI, a comparator 44 triggers a byte counter 46 operation. Said byte count is compared in comparator 48 with the field position to be modified, stored into CS4 register 50. A matching comparison in 48 provides an interrupt signal on the PC BUS.

Assuming an alteration on BSN (or FSN) byte has been programmed, the entered value to add to (or subtract from) the received BSN or FSN byte would have been stored into CS5 register 52. The interrupt signal on the PC BUS triggers addition (or subtraction) into ADDer 35 of the register 52 content to (or from) the actual BSN (or FSN) field contents. The new BSN (or FSN) value is transferred to the TD output link through SCC 37 circuit wherein a new CRC is computed and inserted into the message accordingly.

The modification philosophy for any other byte (SIO, SIF or data) of the frame is different from the BSN/FSN modification principle. As already indicated, alterations may be programmed therein, on a bit basis. In other words, a selected bit position content may be forced to one, zero or X (don't care). CS1 register 54 stores the frame position of the bit(s) to be altered, while CS2 register 55 stores the selected alteration. The bit location within a flowing frame is detected using the comparator operation as described above. One should however note that the DATA field will in fact include a great number of bytes.

Finally the last alterable fields are the CRC field and the flag field. Assuming the CRC has to be altered, XOR circuit 38 will invert the value of CRC field contents into SCC 37 output. Again field location is triggered through same compare operation as described above. Similarly, for flag alteration, XOR 38 is activated which alter the flag, therefore leading to consecutive frames being merged into larger frame.

## Claims

1. A data communication equipment testing tool including a menu driven frame modifier for enabling monitoring data frames flowing over a transmission link between end-users and for selectively altering said frames, said frame modifier including :
   - an operator terminal means provided with a bus;
   - interface card means attached to said bus and connected to said transmission link; and,
   - program controlled means to be loaded into said terminal for providing menu driven pre-setting means and means sensitive to said pre-setting means for monitoring and selectively altering data frames flowing over said transmission link.

2. A data communication equipment testing tool according to claim 1, further including a line analyzer connected to said transmission link and to said frame modifier.

3. A data communication equipment testing tool according to claim 1 or 2, wherein said menu driven pre-setting means include :
   - first means for displaying modifiable frame types and for enabling selecting at least one frame field to be modified within a selected frame type;
   - second means sensitive to said displaying means for defining and programming the requested modifications;
   - third means responsive to said second means for modifying selected frame fields within data frames flowing over said transmission link.

4. A data communication equipment testing tool according to claim 3 wherein said third means include :
   - monitoring means for monitoring the current flow of data provided by one end user over the link;
   - locating means responsive to said first means and to said monitoring means, for locating the selected frame field to be modified; and,
   - means responsive to said locating means, for forcing the frame modification as defined by said second means.

5. A data communication equipment testing tool wherein said interface card include :
   - a deserializer connected to said transmission link and to said bus;
   - buffer register means connected to said deserializer;
   - frame identifier device connected to said buffer register and to said bus;
   - field modifier logic device connected to said bus, to said buffer register and to said frame identifier;
- serializer means connected to said field modifier, to said bus; and,
- means for providing said serializer output to said communication link.

6. A data communication equipment testing tool according to claim 5, further including byte synchro means connected to said deserializer and serializer.

FIG.1

FIG.2A

FIG.2B

EP 0 439 986 A1

FIG.3

FRAME MODIFIER

SS7   MESSAGE   FRAME

| B I BSN B | F I FSN B | LI | SIO | S I F  CCITT#7<br>14    14    4<br>DPC  OPC  SLC | | HO H1 | DATA | CRC | F |
|---|---|---|---|---|---|---|---|---|---|

SS7   MESSAGE   FRAME

| B I BSN B | F I FSN B | LI | SIO | S I F  CCS7<br>24   24   5<br>DPC  OPC SLS HOH1 | DATA | CRC | F |
|---|---|---|---|---|---|---|---|

SS7   STATUS   FRAME

| B I BSN B | F I FSN B | LI | SF | CRC | F |
|---|---|---|---|---|---|

STATUS   FRAME 2

| B I BSN B | F I FSN B | LI | SF SF<br>1   2 | CRC | F |
|---|---|---|---|---|---|

SS7   FILL IN   FRAME

| B I BSN B | F I FSN B | LI | CRC | F |
|---|---|---|---|---|

SDLC   FRAME

| ADD | CTRL | DATA | CRC | F |
|---|---|---|---|---|

HDLC   FRAME

| ADD1 | ADD2 | CTRL | DATA | CRC | F |
|---|---|---|---|---|---|

FIG.4

14

LOAD PROGRAM

user's action
F1 → MENU FRAME selection → save type

user's action → FIELD selection → save FIELD

specific SS7 → BSN/FSN → no

yes

addition → no = subtraction

value to sub ← user's action

complement'2

CRC or FLAG
yes

user's action → value to add

CRC/FLAG register
no

save ADDER ← ADDER register

DATA to replace ← user's action

save DATA ←

(cont'd next page)

PROGRAM DATA FLOW

FIG.5

(from previous page)

no     **SEND**

       yes

user's ——→ **WAIT**     **compare** ←—— type register
action

      **compare FIELD** ←—— FIELD register

specific SS7    **BSN/FSN** ——→ no

       yes        yes

      **CRC/FLAG**

       no

program ——→ **ADDER reg**    **DATA reg**    **CRC/FLAG reg**
action

      **TRANSMIT data to SCC**

      modify DATA after SCC

      **exit**     no (repeat)

      yes

**FIG.6**     RETURN to MENU

PROGRAM DATA FLOW

FIG.7

| B I B | BSN | F I B | FSN | LI | SIO | S I F CCITT#7 14 DPC | 14 OPC | 4 SLC | H0 H1 | DATA | CRC | F |
|---|---|---|---|---|---|---|---|---|---|---|---|---|

CRC1/CRC2

7 6 5 4 3 2 1 0

BSN

7 6 5 4 3 2 1 0

FSN

7 6 5 4 3 2 1 0

XOR

+ −

D7    D7

FLAG

7 6 5 4 3 2 1 0

0 1 1 1 1 1 1 0

XOR  XOR

BUFFER REGISTER

XCEIVER

LINK

DATA IN

30

SCC

8x4

32

33

D7

ADD

35

XCEIVER

31

CS8

SCC

37

CS7  CS8

DATA OUT

ALE

ALE

38

REG

LI

42

REG  54

XCIVER

52

REG

55

REG

CS5

CS8

XCIVER

CS1

CS2

SIO + SIF + DATA

7 6 5 4 3 2 1 0

BYTE CTR

REG

46

48

COMP

INTERRUPT

LI

5 4 3 2 1 0

x x x x x x

REG

40

CS3

COMP

44

REG

CS4

50

COMP

PC BUS

| B I B | BSN | F I B | FSN | LI | SIO | S I F CCITT#7 14 DPC | 14 OPC | 4 SLC | H0 H1 | DATA | CRC | F |
|---|---|---|---|---|---|---|---|---|---|---|---|---|

CS5    CS5    CS3                    CS2                 CS2 + CTR    CS7    CS8

CS2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| A | EP-A-0 332 286  (HEWLETT-PACKARD) <br> * Page 2, lines 35-45; page 4, lines 2-13 * <br> --- | 1-6 | H 04 L  12/26 |
| A | HEWLETT-PACKARD JOURNAL, vol. 36, no. 7, July 1985, pages 4-11; A.C. APPLEYARD et al.: "A protocol analyzer for EDP centers and field service" <br> * Page 6, left-hand column, lines 32-39 * <br> --- | 1,5 | |
| A | COMPUTER COMMUNICATION REVIEW, vol. 18, no. 4, August 1988, pages 200-209; R.T. BRADEN: "A pseudo-machine for packet monitoring and statistics" <br> * Page 201, left-hand column, lines 29-37; figure 1 * <br> ----- | 1,5 | |

TECHNICAL FIELDS
SEARCHED (Int. Cl.5)

H 04 L

The present search report has been drawn up for all claims

| Place of search | Date of completion of the search | Examiner |
|---|---|---|
| THE HAGUE | 30-09-1990 | CRETAINE P.A. |

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

& : member of the same patent family, corresponding
　　document

EPO FORM 1503 03.82 (P0401)